# EUROPÄISCHE PATENTSCHRIFT

(11) **EP 2 104 605 B1**
(45) Veröffentlichungstag und Bekanntmachung des Hinweises auf die Patenterteilung: **16.03.2011**
(21) Anmeldenummer: 08758389.4
(22) Anmeldetag: 06.05.2008
(51) Int. Cl.: B29C 67/00, B22F 3/105

(54) **VORRICHTUNG UND VERFAHREN ZUM HERSTELLEN EINES DREIDIMENSIONALEN OBJEKTES**
DEVICE AND METHOD FOR PRODUCING A THREE-DIMENSIONAL OBJECT
DISPOSITIF ET PROCÉDÉ DE PRODUCTION D'UN OBJET À TROIS DIMENSIONS

(30) Priorität: 25.06.2007 DE 102007029142
(43) Veröffentlichungstag der Anmeldung: 30.09.2009
(73) Patentinhaber: EOS GmbH Electro Optical Systems, 82152 Krailling (DE); 3D-Micromac AG, 09125 Chemnitz (DE)
(72) Erfinder: PAASCHE, Norman, 09648 Mittweida (DE); BRABANT, Thomas, 09648 Mittweida (DE); STREIT, Stefan, 09120 Chemnitz (DE)
(74) Vertreter: Prüfer & Partner GbR European Patent Attorneys
(86) Internationale Anmeldenummer: PCT/EP2008/003622
(87) Internationale Veröffentlichungsnummer: WO 2009/000360

(56) Entgegenhaltungen:
- WO-A-92/22430
- DE-A1- 4 325 573
- US-A- 5 053 090
- US-A- 6 158 346
- US-A1- 2002 145 213
- US-B1- 6 206 672
- US-B1- 6 251 488

## Beschreibung

Die Erfindung betrifft eine Schichtauftragsvorrichtung zum elektrostatischen Schichtauftrag eines pulverförmigen Werkstoffes und insbesondere eine Vorrichtung und ein Verfahren zum schichtweisen Herstellen eines dreidimensionalen Objektes, welche die Schichtauftragsvorrichtung verwenden.

US 5,053,090 beschreibt ein Verfahren gemäß dem Oberbegriff des Anspruchs 10 und eine Vorrichtung gemäß dem Oberbegriff des Anspruchs 1 zum selektiven Sintern einer Pulverschicht mittels eines Lasers. Eine zu verfestigende Pulverschicht fällt aus einem Behälter auf eine Auftragsoberfläche, wo sie mittels einer Walze verdichtet wird. Damit eine höhere Pulverdichte erzielt werden kann, wird zusätzlich ein elektrisches Feld zwischen Walze und Bauplattform angelegt.

US 6,158,346 beschreibt ein Schichtbauverfahren, bei dem ein Auftrag von zu verfestigendem Pulvermaterial mittels einer Art "Druckplatte" erfolgt. Im Einzelnen besteht die Druckplatte aus einem Feld von Mikroelektroden, wobei die Druckplatte über einen Pulverbehälter gehalten wird und durch ein elektrisches Feld zwischen ausgewählten Mikroelektroden und dem Pulverbett Pulver lediglich an ausgewählten Stellen auf die Druckplatte übertragen wird, wobei die ausgewählten Stellen dem Querschnitt eines zu fertigenden Objekts entsprechen. Anschließend wird die Druckplatte über den eigentlichen Baubereich eines zu fertigenden Objekts gebracht, wo durch ein Gegenfeld an den Mikroelektroden das Pulver von der Druckplatte abgelöst wird und mittels Schwerkraft auf das zu fertigende Objekt fallen.

Eine Vorrichtung und ein Verfahren zum Herstellen eines dreidimensionalen Objektes durch selektives Lasersintern sind beispielsweise aus der US 5, 908, 569 bekannt. Eine entsprechende Vorrichtung ist in Fig. 1 dargestellt und soll im folgenden kurz beschrieben werden.

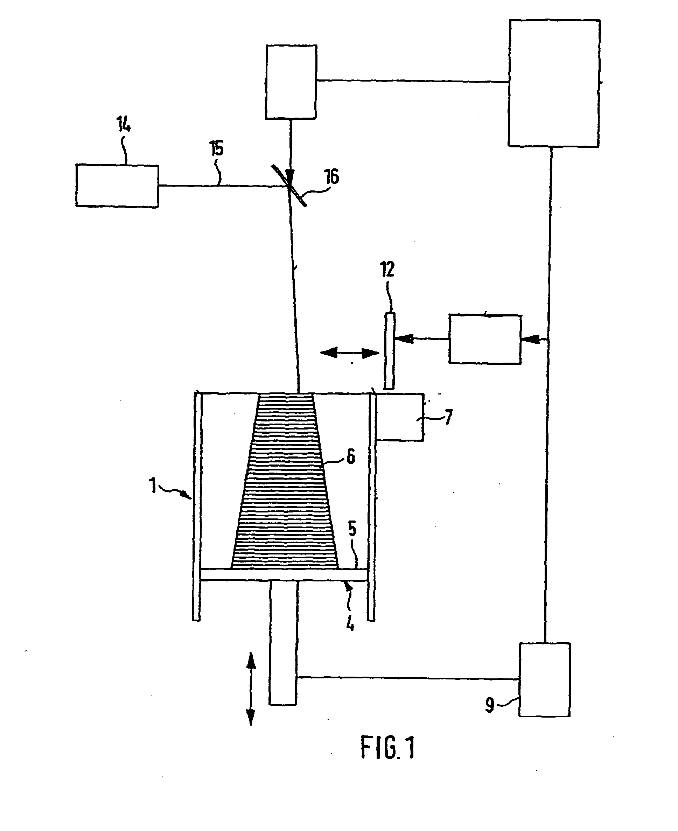

Die in Fig. 1 dargestellte Lasersintervorrichtung weist einen nach oben offenen Behälter 1 auf, in dem ein Träger 4 zum Tragen des zu bildenden Objektes 3 vorgesehen ist. Der Träger 4 ist mittels eines Antriebes in dem Behälter in vertikaler Richtung auf und ab bewegbar. Oberhalb des Behälters 1 ist eine Bestrahlungseinrichtung in Form eines Lasers 14 angeordnet, die einen gerichteten Lichtstrahl 15 abgibt. Dieser wird über eine Ablenkeinrichtung 16 in Richtung des schichtweise zu bildenden Objektes 6 abgelenkt.

Weiterhin ist eine Auftragvorrichtung 12 zum Auftragen eines zu verfestigenden Pulvermaterials 7 auf die Trägeroberfläche 5 oder eine zuletzt verfestigte Schicht vorgesehen. Im Stand der Technik sind verschiedene Auftragvorrichtungen bekannt, mit denen das Pulver mechanisch aufgetragen und geglättet wird. Fig. 2 zeigt beispielhaft eine Auftragvorrichtung aus der WO 2006/122645 in Gestalt eines Beschichters 24 mit zwei Klingen 21a und 21b, die an den Seiten durch zwei nicht dargestellte Seitenwände parallel zur Zeichenebene zusammengehalten werden. Die zwei Klingen und die zwei Seitenwände bilden zusammen eine nach oben und unten offene Vorratskammer 22, die der Aufnahme des pulverförmigen Materials für eine Schicht dient. Durch Verfahren des Beschichters 24 in Richtung des Pfeiles B wird das Pulver 27 aus der Vorratskammer 22 über die Oberfläche 5 verteilt, wobei die Pulverschicht durch die Klingen 21a und 21b glatt gestrichen wird.

In der deutschen Offenlegungsschrift DE 199 52 998 wird eine Vorrichtung zur direkten Herstellung von Körpern beschrieben, bei der sich jeweils 2 Baukammern und 2 Pulvervorratskammern ähnlich Viertelkreisen gegenüberliegen. Der Pulverauftrag in den Baukammern erfolgt dabei dergestalt, dass eine halbkreisförmige Abdeckplatte, die jeweils zwei benachbarte Kammern überdeckt, verdreht wird. Durch den als Rakel ausgestalteten geraden Rand der Abdeckplatte wird dann Pulver aus einem Vorratsbehälter in den benachbarten Baubehälter geschoben.

In der DE 10 2004 022 385 A1 erfolgt der Pulverauftrag ebenfalls mit einer drehbaren Rakel, welche ringförmig gestaltet ist, wobei der Ring als Ganzes um eine außerhalb des Ringes liegende Drehachse verschwenkt wird.

Auch die US 4,863,538 offenbart ein Verfahren und eine Vorrichtung zum Herstellen von Teilen mittels selektiven Sinterns. Dort wird eine vorbestimmte Menge des pulverförmigen Materials auf eine absenkbare Unterlage gegeben und mittels einer über die Unterlage bewegbaren Walze unter gleichzeitiger Rotation der Walze entgegen der Fortbewegungsrichtung verteilt.

Bei allen Verfahren des Standes der Technik wird eine Klinge, eine Walze oder ein Rakel für den Schichtauftrag verwendet. Dabei übt allerdings die Klinge, der Rakel oder die Walze nicht nur auf das Pulver eine mechanische Kraft aus. Wenn die Pulverschicht auf eine bereits verfestigte Schicht des zu fertigenden Bauteils aufgetragen wurde, dann erfahren auch unweigerlich bereits vorhandene Teile des Bauteils diese Kraft, die in der Regel scherend wirkt. Insbesondere bei grazilen oder dünnwandigen Strukturen kann hieraus eine Rißbildung oder Deformation resultieren, was sich nachteilig auf das Aspektverhältnis und die Maßhaltigkeit des zu erzeugenden Objektes auswirkt.

Die Aufgabe der Erfindung ist die Bereitstellung einer Vorrichtung zum berührungslosen Schichtauftrag, bei dem die oben geschilderten Probleme nicht mehr auftreten. Insbesondere sollen eine dadurch optimierte Vorrichtung zur schichtweisen Herstellung von Bauteilen durch Sintern sowie ein diesbezügliches Verfahren bereit gestellt werden.

Die Aufgabe wird gelöst durch eine Vorrichtung nach Anspruch 1 und ein Verfahren nach Anspruch 10.

Weiterbildungen der Erfindung sind in den Unteransprüchen beschrieben.

Gemäß Anspruch 1 enthält eine Vorrichtung zum Auftragen von Pulver auf eine Auftragsoberfläche unter anderem eine Spannungsquelle (32) zum Anlegen einer Spannung zwischen Pulverbehälter und Auftragsoberfläche. In einer besonderen Weiterentwicklung ist dabei die einstellbare Feldstärke größer als 1000 V/m.

Gemäß Anspruch 1 weist eine Vorrichtung zum Herstellen eines dreidimensionalen Objektes eine Verfestigungseinrichtung auf. In besonderen Weiterentwicklungen der Erfindung kann solch eine Verfestigungseinrichtung auf folgende Weise ausgestaltet sein:

Die Verfestigungseinrichtung kann eine Strahlungsquelle sein, welche elektromagnetische Strahlung auf die Pulverschicht richtet. Insbesondere kann die Verfestigungseinrichtung aus einem Laser (39) und einer Ablenkeinrichtung (38) zum Richten des Laserstrahls auf die Pulverschicht bestehen. Alternativ dazu kann die Verfestigungseinrichtung eine Wärmestrahlungsquelle zum Verfestigen mittels Wärmestrahlung aufweisen. Als weitere Alternative kann die Verfestigungseinrichtung eine Quelle zur Absonderung von Teilchenstrahlen aufweisen.

In einer besonderen Weiterentwicklung des Verfahrens nach Anspruch 10 wird der Pulverbehälter (35) einer Vibration oder einem Rüttelvorgang unterzogen oder das Pulver im Pulverbehälter (35) wird während des Schichtauftrags mittels eines Rührwerks in Bewegung gehalten. Zusätzlich oder unabhängig hiervon erfolgt gemäß einer weiteren besonderen Weiterentwicklung die Verfestigung mittels Einwirkens von elektromagnetischer Strahlung auf das Pulver. Zusätzlich oder unabhängig hiervon wird gemäß einer weiteren besonderen Weiterentwicklung als Baumaterial ein Metall-, Edelmetall-, Keramik-, Oxid- oder Plastikpulver verwendet.

Im Folgenden werden Ausführungsbeispiele der Erfindung im Zusammenhang mit den Zeichnungen beschrieben. Von den Figuren zeigen:
- Fig. 1: eine Lasersintervorrichtung des Standes der Technik,

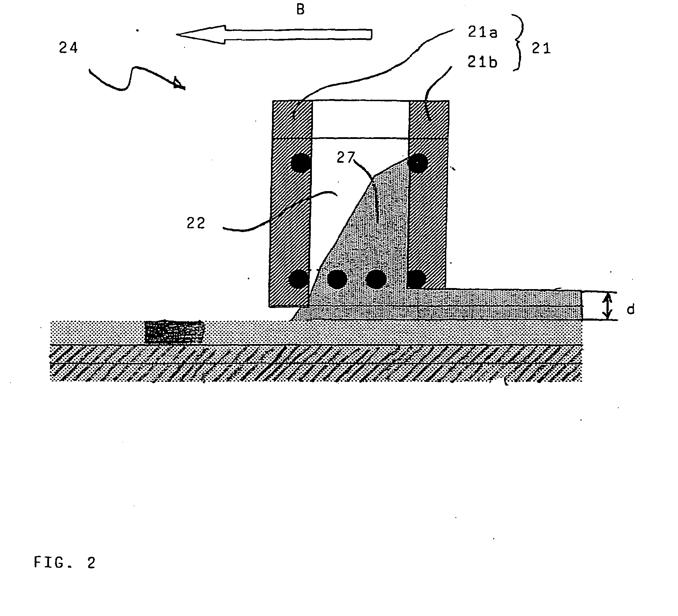

- Fig. 2: eine Darstellung einer Pulverauftragsvorrichtung des Standes der Technik,
- Fig. 3: eine Darstellung einer Vorrichtung gemäß einer ers- ten Ausführungsform der Erfindung während des Schichtauftrags,
- Fig. 4: eine Darstellung einer Vorrichtung gemäß einer ers- ten Ausführungsform der Erfindung während der selek- tiven Schichtverfestigung,
- Fig. 5: eine Darstellung einer zweiten Ausführungsform der Erfindung,
- Fig. 6: eine Darstellung einer dritten Ausführungsform der Erfindung,
- Fig. 7: mehrere Pulverreservoire gemäß einer vierten Ausfüh- rungsform der Erfindung.

### Erste Ausführungsform

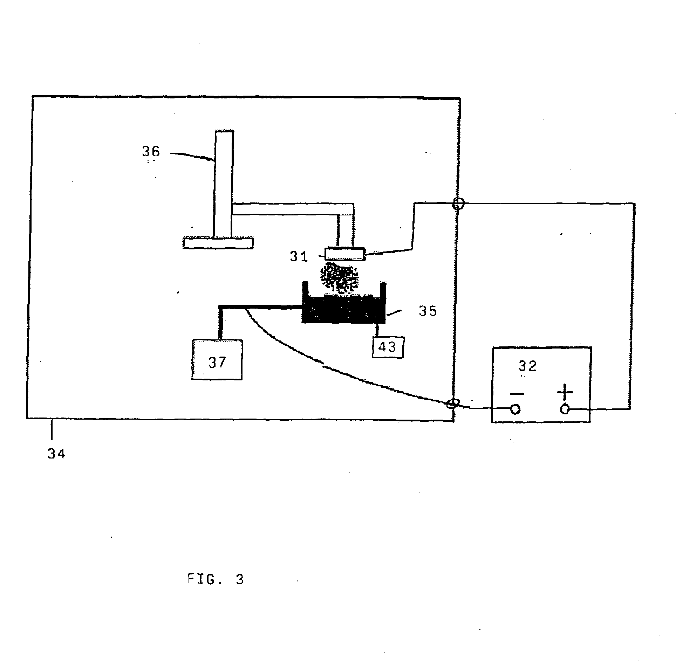

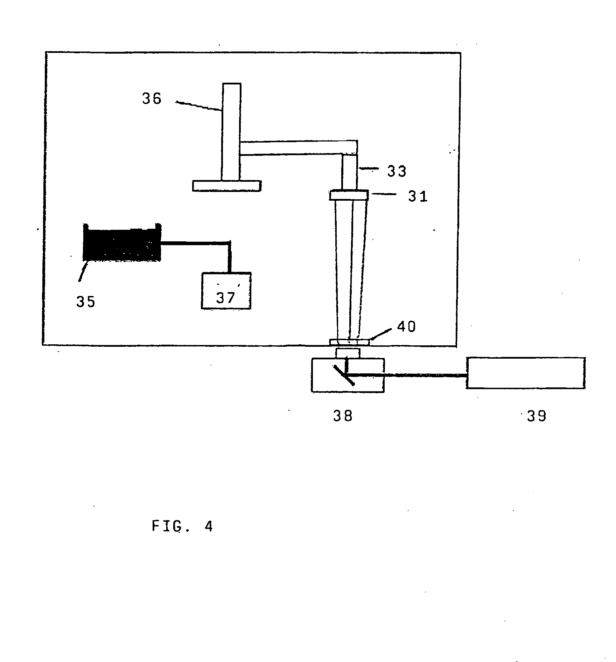

Fig. 3 und 4 zeigen eine erste Ausführungsform der Erfindung. In Fig. 3 und 4 ist eine erfindungsgemäße Schichtauftragsvorrichtung dargestellt, die in einer Lasersintervorrichtung verwendet wird. Dabei zeigt Fig. 3 die Lasersintervorrichtung während des Schichtauftrags und Fig. 4 dieselbe Vorrichtung während der Schichtverfestigung.

Im einzelnen ist ein Baubehälter 34 dargestellt, in welchem ein dreidimensionales Objekt schichtweise auf einer Bauplattform 31 hergestellt wird. Letztere ist mechanisch mit einer Hubvorrichtung 36 verbunden, wobei die Hubvorrichtung die Bauplattform in vertikaler Richtung auf und ab bewegen kann. In Fig. 3 befindet sich unterhalb der Bauplattform 31 ein Pulverbehälter 35 mit Pulver, das zum Aufbau des Objektes als Baumaterial dienen soll. Mittels einer Hochspannungsquelle 32 ist zwischen Bauplattform 31 und Pulverbehälter 35 eine Hochspannung angelegt, die typischerweise im Bereich von 100 V bis 40 kV ist, beispielsweise 10 kV. Die Bauplattform 31 ist dabei über einen Isolator 33 mechanisch mit der Hubvorrichtung 36 verbunden, um eine elektrische Entkopplung zu gewährleisten.

Mittels der gezeigten Anordnung kann eine Pulverschicht in folgender Weise berührungslos auf die Bauplattform aufgetragen werden:

Durch das Anlegen der Spannung wird ein elektrisches Feld zwischen dem Pulverbehälter 35 und der Bauplattform 31 in ähnlicher Weise wie in einem Kondensator erzeugt. Dieses elektrische Feld verursacht eine Bewegung des Pulvers aus dem Vorratsbehälter 35 entgegen der Schwerkraft zur Bauplattform 31 hin. Als Resultat scheidet sich das Pulver auf der Bauplattform ab. Die notwendige Spannung ergibt sich aus der notwendigen Feldstärke, welche wiederum abhängig ist vom Abstand der Bauplattform 31 zum Pulverbehälter 35 und vom Gewicht der Pulverkörner. Bei der Verwendung von Edelstahlpulver 316L, Körnung 10 µm wurden vorteilhafte Ergebnisse mit einem Abstand von 20mm und einer Spannung von 7 kV erzielt. Weitere Materialien, wie ein bronzebasiertes mehrkomponentiges Metallpulver ('DirectMetal 20', von EOS GmbH Electro Optical Systems vertrieben) mit 20 µm Körnung, ein Wolframpulver mit 6 µm Körnung und ein Al₂O₃-Keramikpulver mit 10 µm Körnung wurden erfolgreich verwendet.

Die Teilchen geraten im elektrischen Feld deshalb in Bewegung, weil sie je nach eigener Ladung entweder zur positiven oder negativen Elektrode (der Bauplattform bzw. dem Pulverbehälter) hingezogen werden. Die Teilchen im Pulverreservoir sind zwar in Summe neutral, müssen jedoch als mehr oder weniger isolierte Ladungsträger betrachtet werden. Die Elektroden separieren deshalb ungleich geladene Teilchen voneinander, indem sie Teilchen mit entgegengesetzter Ladung anziehen und solche mit gleicher Ladung abstoßen.

Die Teilchen haften an der Bauplattform durch Verhaken an der Oberfläche, durch Kohäsion, durch van der Waalsche Kräfte und durch die elektrostatische Anziehung solange die Ladung noch nicht ausgeglichen ist. Von Bedeutung ist hierbei, daß benachbarte separate Pulverteilchen gleicher Ladung einander abstoßen. Dies führt zu einer gleichmäßigen Packungsdichte der Teilchen auf der Bauplattformoberfläche und zur Vermeidung von Konglomeraten auf der Oberfläche. Ungleich geladene Teilchen ziehen sich zwar an, werden jedoch im elektrischen Feld voneinander getrennt, so daß im Endeffekt die Teilchen im Feld auf Distanz zueinander gehalten werden und es keine Störstellen durch ungleich geladene Teilchen in der Schicht gibt.

Aus den obigen Ausführungen wird klar, daß die Eigenschaften der elektrostatisch aufgetragenen Pulverschicht und die notwendige Feldstärke für die Beschichtung von der Leitfähigkeit des Pulvers abhängen. Ist die Leitfähigkeit des Pulvers hoch, so kann schneller ein Ladungsausgleich zwischen benachbarten Teilchen stattfinden. Sobald jedoch beide gleich geladen sind, stoßen sie sich ab, was zu einem gleichmäßigeren Schichtauftrag führt.

Wie die obigen Ausführungen zeigen, kann allein durch Herstellen des notwendigen elektrischen Feldes eine Schicht auf die Bauplattform oder die Oberfläche einer bereits verfestigten Schicht aufgetragen werden (Im Folgenden wird allgemein von 'Auftragsoberfläche' gesprochen.). Eine Steuerung des Schichtauftrags erfolgt dabei über die zwischen den Elektroden erzeugte Feldstärke und die Dauer, während der das elektrische Feld anliegt. Die notwendige Feldstärke muss dabei nicht allein über die angelegte Spannung eingestellt werden. Es ist ebenfalls möglich, die Feldstärke über den Abstand zwischen Pulverbehälter und Bauplattform einzustellen. Dies kann über die Hubvorrichtung 36 geschehen. Die Bewegung des Pulverbehälters kann dabei durch Verfahren im Raum und/oder Drehen um eine außerhalb des Pulverbehälters liegende, beispielsweise vertikale, Achse geschehen.

Da das elektrische Feld ebenfalls dazu führen kann, daß eine Verdichtung des Pulvers im Pulverreservoir stattfindet, welche nicht erwünscht ist, ist ein Rüttelmechanismus oder Vibrationsmechanismus 43 am Pulverbehälter 35 vorgesehen, durch welchen dieser Verdichtung erfolgreich entgegengewirkt werden kann. Beispielsweise kann der Pulverbehälter federnd aufgehängt sein mit einem an der Unterseite des Pulverbehälters befestigten Motor mit exzentrischem Gewicht an der Rotorachse. Alternativ kann aber auch die Halterung des Pulverbehälters in eine Rüttelbewegung versetzt werden. Weiterhin können verschiedenste Rüttler oder Vibratoren, Ultraschallvibratoren oder Rührwerke zum Einsatz kommen. Infolge der Rüttelbewegung und der Wirkung des elektrischen Feldes stellt sich ein Gleichgewicht zwischen anhaftendem und wieder abgestoßenem Pulver zwischen den Elektroden (Bauplattform/Pulverbehälter) ein, welches in den Figuren durch eine Wolke dargestellt ist.

Nach dem Auftrag der Schicht wird das elektrische Feld abgeschaltet und eine selektive Verfestigung mittels elektromagnetischer Strahlung durchgeführt. Dabei muß es sich nicht notwendigerweise um Laserlicht handeln, denkbar ist auch Teilchenstrahlung oder Wärmestrahlung. Alternativ kann auch ein Kleber selektiv aufgesprüht werden. Fig. 4 zeigt die Vorrichtung gemäß der ersten Ausführungsform in einem Zustand, in dem eine aufgetragene Pulverschicht verfestigt wird. Hierbei ist beispielhaft eine Laserstrahlquelle 39 dargestellt, die einen über eine Ablenkeinrichtung 38 abgelenkten Strahl durch ein Strahleintrittsfenster 40 auf die Pulverschicht auf der Bauplattform 21 richtet. Hierzu wird mittels des Antriebs 37 der Pulverbehälter von der Bauplattform 31 weg bewegt und die Bestrahlungseinrichtung (38, 39) unter die Bauplattform 31 bewegt. Natürlich kann die Bestrahlungseinrichtung auch ortsfest sein und nur der Pulverbehälter verfahren werden. Während der Belichtung ist die Hochspannung abgeschaltet, denkbar ist es jedoch auch die Spannung angelegt zu lassen, da durch die weite Entfernung des Pulverbehälters 35 von der Bauplattform 31 die notwendige Feldstärke für einen Pulverauftrag nicht erreicht wird.

### Zweite Ausführungsform

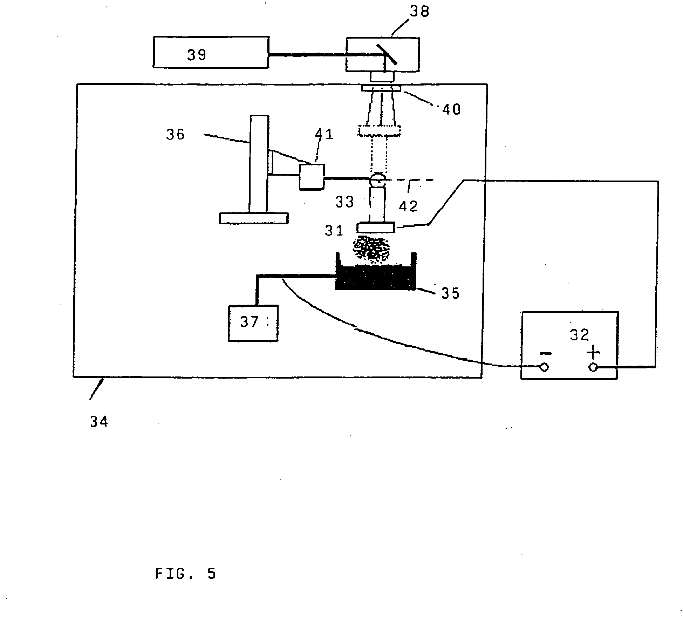

Um zu vermeiden, daß sich im Laufe der Zeit aufgrund eines Ladungsausgleichs Pulverteilchen von der gemäß Ausführungsform 1 nach unten zeigenden Bauplattform 1 ablösen, ist es von Vorteil, wenn die Bauplattform 1 lediglich während des Pulverauftrags nach unten zeigt. Gemäß einer zweiten Ausführungsform, die in Fig. 5 dargestellt ist, ist die Bauplattform 31 daher nicht mehr starr mit der Hubvorrichtung 36 verbunden, sondern ist über eine Drehvorrichtung 41 um eine horizontale Achse 42 drehbar. Dadurch ist es möglich, nach Beendigung des Auftragsvorgangs die Bauplattform mittels einer Drehung um die Drehachse 42 nach oben zu drehen, so daß die aufgetragene Schicht dem Strahleintrittsfenster gegenüber liegt. Die räumliche Trennung von Bauplattform 31 und Halterung an der Hubvorrichtung 36 wird dabei mittels eines Isolators 33 bewirkt, der gleichzeitig die Bauplattform von der Hubvorrichtung elektrisch entkoppelt. Bei der Darstellung in Fig. 5 ist zu beachten, daß die Bauplattform 31 nicht gleichzeitig in der oberen Belichtungsstellung und der unteren Pulverauftragsstellung sein kann. Daher ist die Bauplattform in der Belichtungsstellung gestrichelt dargestellt, um deutlich zu machen, dass die beiden Stellungen der Bauplattform zu unterschiedlichen Zeiten eingenommen werden.

Die Belichtung muss nicht notwendigerweise in der oberen Position in Fig. 5 erfolgen. Ebenso gut kann die Belichtungsvorrichtung lateral zu der Drehachse 42 angeordnet sein, so daß zwischen Pulverauftragsstellung und Belichtungsstellung lediglich eine Drehung um einen Winkel von 90° erfolgt. Ganz allgemein ist die Wahl eines beliebigen von 180° abweichenden Winkels möglich.

Im Übrigen ergeben sich für die zweite Ausführungsform die gleichen Variationsmöglichkeiten wie sie in Zusammenhang mit der ersten Ausführungsform beschrieben wurden.

### Dritte Ausführungsform

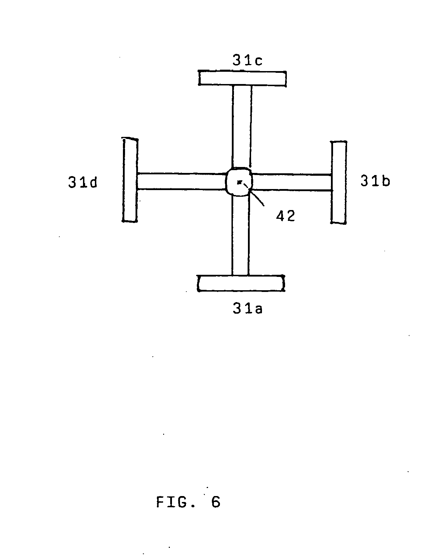

Fig. 6 zeigt eine Ansicht einer erfindungsgemäßen Vorrichtung gemäß der dritten Ausführungsform 42 von einem Punkt auf der Drehachse 42 aus betrachtet. Man erkennt Bauplattformen 31a, 31b, 31c, 31d, die unter einem Winkel von 90° zueinander um die Drehachse 42 herum angeordnet sind. Abgesehen von dieser Mehrzahl an Bauplattformen samt zugehörigen Halterungen ist die Vorrichtung der dritten Ausführungsform identisch zu jener der zweiten Ausführungsform.

Gemäß der dritten Ausführungsform ist es beispielsweise möglich, während des Pulverauftrags auf die Bauplattform 31a gleichzeitig bereits die schon vorher auf die Bauplattform 31c aufgetragene Pulverschicht von oben zu belichten. Dies führt zu einer Verkürzung der Bauzeit. Obwohl in Fig. 6 beispielhaft vier Bauplattformen gezeigt sind, ist ebenso gut eine andere Anzahl von Bauplattformen denkbar, insbesondere zwei einander gegenüberliegende Bauplattformen. Darüber hinaus muß bei der dritten Ausführungsform die Belichtung nicht immer auf der in Figur 6 nach oben zeigenden Bauplattform 31c stattfinden, sondern könnte genauso gut jeweils auf der nach links oder rechts zeigenden Bauplattform 31d bzw. 31b stattfinden. Darüber hinaus wäre es ebensogut möglich, mehrere Verfestigungsvorrichtungen vorzusehen.

### Vierte Ausführungsform

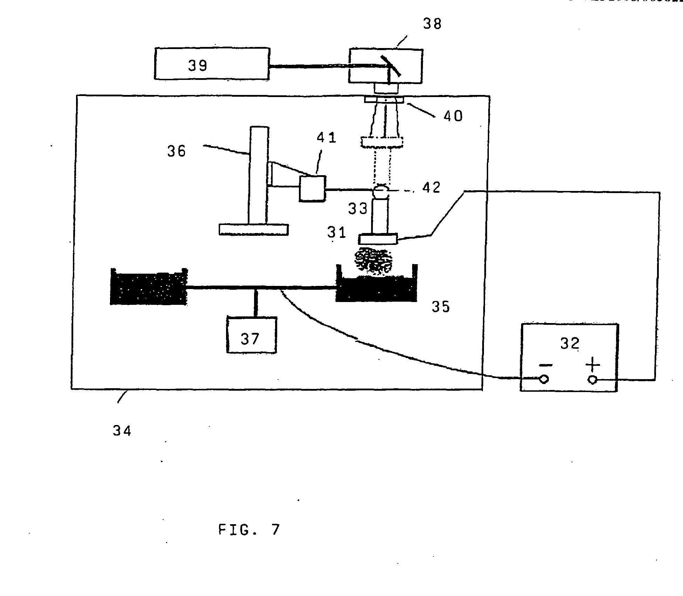

Fig. 7 zeigt eine Vorrichtung gemäß einer vierten Ausführungsform der Erfindung.

Im Gegensatz zu den Vorrichtungen der vorangegangenen Ausführungsformen sind bei der vierten Ausführungsform mehrere Pulverbehälter 35 (in Fig. 7 beispielhaft zwei) vorhanden. Da in den einzelnen Pulverbehältern unterschiedliche Materialien enthalten sein können, ist es somit möglich, nacheinander Schichten aus unterschiedlichen Pulvermaterialien aufzubringen. Beispielsweise kann zunächst eine Pulverschicht mittels des in Fig. 7 rechten Behälters aufgetragen werden und versintert werden und beim nächsten Schichtauftragsvorgang der in Fig. 7 links gezeigte Behälter unter die nach unten zeigende Bauplattform 31 gefahren werden. Es versteht sich, daß eine beliebige Abfolge von Materialschichten möglich ist. Des weiteren wäre es auch möglich, auf einer Bauplattform unterschiedliche Körper in unterschiedlichen Materialien zu erzeugen. Schließlich ist es sogar möglich, neben Strukturgradienten auch dreidimensionale Materialgradienten in horizontaler und vertikaler Baurichtung in das Werkstück einzubringen. Ebenso besteht die Möglichkeit, während des Auftrags einer Pulverschicht Pulver aus mehreren verschiedenen Behältern dadurch zu vermischen, daß für den Auftrag der erwähnten einen Schicht mehrere Pulverbehälter unter die Bauplattform 21 gefahren werden.

Das Vorsehen mehrerer Pulverbehälter ist bei jeder der Ausführungsformen 1 bis 3 möglich.

### Weitere Abwandlungen

Bei allen oben beschriebenen Ausführungsformen sind auch die weiteren Abwandlungen denkbar:

Die Geschwindigkeit, mit der ein Pulverteilchen bei anliegender Hochspannung auf die Bauplattform auftrifft, ist abhängig von der Feldstärke und damit der Beschleunigungsspannung. Um eine besonders gute Haftung der Pulverpartikel zu erzielen ist es weiterhin möglich, eine Hochspannung in Gestalt einer pulsierenden Gleichspannung zu verwenden, welche eine stoßweise Bewegung der Pulverpartikel zu der Bauplattform 21 hin hervorruft, wodurch ein "Einnageln" realisiert wird.

Weiterhin ist es möglich, eine Verdichtung des Pulvers im Pulverbehälter nicht mittels Rüttelns bzw. Vibrierens des Pulverbehälters, sondern durch Umrühren des Pulvers im Pulverbehälter mittels eines Rührwerks zu verhindern.

Bei allen Ausführungsformen und Abwandlungsmöglichkeiten ist es darüber hinaus möglich, einen Gaseinlaß in dem Baubehälter 34 vorzusehen, durch welchen Inertgas zugeführt werden kann zur Vermeidung einer Oxidation der Pulverpartikel während des Bauvorgangs.

Insbesondere Funktionsoberflächen, also Abschnitte bzw. Ausschnitte größerer Flächen, die potentiell einem höheren Verschleiß ausgesetzt sind, weil sie beispielsweise als Führungsbahn dienen, können durch das erfindungsgemäße Verfahren selektiv verschleißfester gemacht werden. Durch den elektrostatischen Pulverauftrag kann dabei mindestens eine Schicht eines Keramikmaterials oder eines anderen Werkstoffs aufgebracht werden, um die Oberflächen von solchen Führungsflächen zu veredeln und damit gezielt verschleißfester zu machen.

Obwohl in allen Figuren der Pulverbehälter 35 vollkommen offen zur Bauplattform 31 hin ist, kann bei allen Ausführungsformen der Pulverbehälter 35 so ausgestaltet sein, dass er eine metallisch leitende Wechselkartusche ist, welche in einen Vibratoreinsatz des Vibrationsmechanismus 43 eingesetzt werden. Die Kartuschen sind dabei mit einem Öffnungsmechanismus versehen, der so gestaltet sein kann, dass die Kartusche jeweils vor dem Pulverauftrag geöffnet wird und nach Entnahme des Pulvers wieder verschlossen wird. Es ist dabei nicht unbedingt notwendig, dass zum Öffnen der Kartusche die gesamte Deckelfläche der Kartusche entfernt wird. Denkbar ist vielmehr auch, dass lediglich eine Öffnung 35a in der beim Pulverauftrag zur Bauplattform hin zeigenden Deckelfläche freigelegt wird.

Als besonderer Vorteil der Erfindung kann keine Bauteilzerstörung durch Bruchstücke zwischen einer Rakelkante und dem Bauteil auftreten. Es fehlt an jeglicher mechanischer Wechselwirkung mit einer Pulverauftragsvorrichtung.

Desweiteren ergibt sich bei dem erfindungsgemäßen Verfahren und der erfindungsgemäßen Vorrichtung der Vorteil, daß kein Pulverbett für die Fertigung der Bauteile bereitgehalten werden muß. Es wird nur so viel Pulver benötigt, wie das eigentliche Volumen des Bauteiles einnimmt. Damit ergibt sich ein Materialeinsparungspotential besonders bei kostenintensiven Edelmetallen. Auf der Bauplattform kann sich infolge der Schwerkraft nur eine dünne Pulverschicht ausbilden, die die Oberfläche in gleichmäßiger Pulverdicke überzieht. Überschüssiges, ungesintertes Material fällt nach dem Verfestigungsvorgang beim erneuten Pulverauftrag wieder infolge der Schwerkraft (vor dem Anlegen der Hochspannung) in den Pulverbehälter zurück.

Weiterhin findet beim elektrostatischen Schichtauftrag eine Selektion nach der Korngröße des pulverförmigen Ausgangswerkstoffes statt, da leichtere Pulverteilchen eher aus dem Pulverbehälter angehoben werden. Dadurch sind extrem dünne und zugleich dichte Pulverschichten auf der Bauplattform 21 möglich und die aufgetragene Schicht ist sehr gleichmäßig.

Desweiteren lassen sich Strukturen und Körper in vorhandene Körper integrieren, was in rakelbasierenden Sintermaschinen unmöglich ist. Der Pulverauftrag kann bei elektrostatischem Auftrag auch in Vertiefungen stattfinden, wodurch Pulver im Nachhinein in bestehenden geometrischen Körpern, z.B. in Höhlungen, aufgetragen und verfestigt werden kann. Damit ist ein gemischter Aufbau von Halbzeugen in Verbindung mit Sinterwänden zur Erzeugung komplexer Körper möglich. Beispielsweise lassen sich Zahnräder mit verschleißfestem Zahnkranz in hoher Präzision kostengünstig herstellen. Eine andere Anwendungsmöglichkeit ist das Einbringen von präzisen Wänden oder Geometrien in herkömmlich gefertigte Gehäuse oder ähnliche Gebilde.

Da ein zeitintensiver Rakelvorgang wegfällt ergibt sich schließlich durch den elektrostatischen Pulverauftrag eine Bauzeitverkürzung.

## Patentansprüche

1. Vorrichtung zum Herstellen eines dreidimensionalen Objektes durch Verfestigen von Schichten eines pulverförmigen Materials an den dem jeweiligen Querschnitt des Objektes entsprechenden Stellen mit
einer Bauplattform (31) zum Tragen des zu bildenden Objektes, einer Verfestigungsvorrichtung (38, 39, 40),
einer Pulverauftragsvorrichtung, welche geeignet ist, das Pulver auf die Bauplattform oder die Oberfläche einer bereits verfestigten Schicht aufzutragen,
wobei die Pulverauftragsvorrichtung
einen Pulverbehälter (35) mit Pulver, das zum Aufbau des Objektes als Baumaterial dienen soll aufweist:
**dadurch gekennzeichnet, dass** die Pulveraultrags vorrichtung eine Spannungsquelle (32) zum Anlegen einer Spannung zwischen dem Pulverbehälter als der einen Elektrode und der Bauplattform als der anderen Elektrode aufweist:
wobei der Abstand zwischen dem Pulverbehälter (35) und der Bauplattform (31) und die Spannung so einstellbar sind, dass zwischen dem Pulverbehälter und der Bauplattform ein elektrisches Feld erzeugt wird, welches geeignet ist, eine Bewegung des pulverförmigen Materials aus dem Pulverbehälter entgegen der Schwerkraft zur Bauplattform zu erzeugen und
wobei der Pulverbehälter (35) so ausgestaltet ist, dass er zumindest teilweise aus einem leitenden Material besteht und bei anliegender Spannung an seiner zu der Bauplattform gerichteten Seite eine Öffnung aufweist oder vollkommen offen ist.

2. Vorrichtung nach Anspruch 1, weiterhin mit einer Positioniereinrichtung (37) zum Einstellen des Abstandes zwischen dem Pulverbehälter (35) und der Bauplattform (31).

3. Vorrichtung nach Anspruch 1 oder 2, bei der die einstellbare Feldstärke größer als 1000 V/m ist.

4. Vorrichtung nach einem der Ansprüche 1 bis 3 mit
einer Positioniervorrichtung (37), die zum Auftragen des Pulvers den Pulverbehälter (35) unter der Bauplattform (31) positioniert.

5. Vorrichtung nach einem der Ansprüche 1 bis 4, weiterhin mit einer Rüttelvorrichtung oder Vibrationsvorrichtung (43), welche geeignet ist, den Pulverbehälter während des Pulverauftrags zu rütteln, oder einem Rührwerk, welches geeignet ist, den Inhalt des Pulverbehälters zu durchmischen.

6. Vorrichtung nach einem der Ansprüche 1 bis 5, die eine Drehvorrichtung (41) aufweist, mit welcher die Bauplattform (31) über einen Isolator (33) verbunden ist,
wobei die Drehvorrichtung (41) eine Drehung der Bauplattform um eine horizontale Achse (42) gestattet, welche während des Pulverauftrags oberhalb der Bauplattform angeordnet ist.

7. Vorrichtung nach Anspruch 6,
wobei die Verfestigungsvorrichtung (38, 39, 40) so angeordnet ist, dass die Bauplattform von der Position, in der der Pulverschichtauftrag stattfindet, in die Position, in der die Verfestigung stattfindet, um einen Winkel von 180° verschwenkt werden muss.

8. Vorrichtung nach einem der Ansprüche 6 oder 7, bei der die Verfestigungseinrichtung eine Strahlungsquelle ist, welche elektromagnetische Strahlung auf die Pulverschicht richtet.

9. Vorrichtung nach einem der Ansprüche 1 bis 8, welche mehr als einen Pulverbehälter (35) aufweist.

10. Verfahren zur schichtweisen Herstellung eines dreidimensionalen Objektes mit den Schritten:
Auftragen einer Schicht eines pulverförmigen Baumaterials auf die Auftragsoberfläche einer Bauplattform (31) oder einer bereits verfestigten Schicht und
selektives Verfestigen der aufgetragenen Schicht an den dem Querschnitt des Objektes entsprechenden Stellen, **dadurch gekennzeichnet, dass**
das Pulver mittels Erzeugens eines elektrischen Feldes zwischen einem Pulverbehälter (35) und der Bauplattform (31) aufgetragen wird,
wobei eine Vorrichtung nach einem der Ansprüche 1 bis 9 verwendet wird.

11. Verfahren nach Anspruch 10, bei dem bei dem der Pulverbehälter (35) einer Vibration oder einem Rüttelvorgang unterzogen wird oder das Pulver im Pulverbehälter (35) während des Schichtauftrags mittels eines Rührwerks in Bewegung gehalten wird.

12. Verfahren nach Anspruch 10 oder 11, bei dem das elektrische Feld mittels Variierens des Abstands zwischen Pulverbehälter (35) und Bauplattform (31) eingestellt wird.

13. Verfahren nach einem der Ansprüche 10 bis 12, bei dem das Objekt in einer Vertiefung der Auftragsoberfläche oder in einem Hohlraum eines anderen Objektes erzeugt wird.

14. Verfahren nach einem der Ansprüche 10 bis 13, bei dem für den Schichtauftrag verschiedene Pulver aus mehreren verschiedenen Pulverbehältern (35), die sich im Material und/oder der mittleren Korngröße voneinander unterscheiden, verwendet werden.

15. Verfahren nach Anspruch 14, bei dem für den Auftrag einer Schicht mehrere verschiedene Pulverbehälter (35) verwendet werden.

## Claims

1. Device for manufacturing a three-dimensional object by solidifying layers of a material in powder form at the positions corresponding to the respective cross section of the object, comprising
a building platform (31) for supporting the object to be formed,
a solidification device (38, 39, 40), and
a powder application device that is able to apply the powder to the building platform or to the surface of an already solidified layer,
wherein the powder application device has a powder container (35) with powder which is to be used as a building material for building the object,
**characterized in that**
the powder application device has a voltage source (32) for applying a voltage between the powder container (35) as the one electrode and the building platform as the other electrode,
wherein the distance between the powder container (35) and the building platform (31) and the voltage are adjustable in a way that an electric field is generated between the powder container and the building platform which is able to cause a movement of the material in powder form from the powder container to the building platform against the gravitation and
wherein the powder container (35) is formed so that it at least partially consists of a conductive material and has an opening or is completely open at its side facing the application surface, when a voltage is applied.

2. Device according to claim 1, further comprising a positioning device (37) for adjusting the distance between the powder container (35) and the building platform (31).

3. Device according to claim 1 or 2, wherein the adjustable field strength is higher than 1000 V/m.

4. Device according to one of claims 1 to 3, comprising a positioning device (37) which positions the powder container (35) under the building platform (31) for applying the powder.

5. Device according to one of claims 1 to 4 further comprising a shaking device or vibrating device (43) that is able to shake the powder container during the powder application or a stirring device that is able to mix the contents of the powder container.

6. Device according to one of claims 1 to 5, comprising
a rotating device (41) to which the building platform (31) is connected via an insulator (33),
wherein the rotating device (41) allows a rotation of the building platform around a horizontal axis (42) that is located above the building platform during the powder application.

7. Device according to claim 6, wherein the solidification device (38, 39, 40) is arranged such that the building platform has to be rotated from the position in which the powder layer application is effected to the position in which the solidification is effected by an angle of 180°.

8. Device according to claim 6 or 7, wherein the solidification device is a radiation source that directs electromagnetic radiation onto the powder layer.

9. Device according to one of claims 1 to 8, comprising more than one powder container (35).

10. Method for a layer-wise manufacturing of a three-dimensional object having the steps:
applying a layer of a building material in powder form onto the application surface of a building platform (31) or a previously solidified layer and
selectively solidifying the applied layer at the positions corresponding to the cross-section of the object,
**characterized in that**
the powder is applied by generating an electric field between the powder container (35) and the building platform (31),
wherein a device according to one of claims 1 to 9 is used.

11. Method according to claim 10, wherein the powder container (35) is subjected to a vibration or a shaking process or the powder in the powder container (35) is kept in motion by means of a stirring device during the layer application.

12. Method according to claim 10 or 11, wherein the electric field is adjusted by varying the distance between the powder container (35) and the building platform (31).

13. Method according to one of claims 10 to 12, wherein the object is generated in a recess of the application surface or in a cavity of another object.

14. Method according to one of claims 10 to 13, wherein different powders from several different powder containers (35) that differ in material and/or the medium grain size are used for the layer application.

15. Method according to claim 14, wherein several different powder containers (35) are used for the application of one layer.

## Revendications

1. Appareil pour la fabrication d'un objet tridimensionnel par solidification de couches d'un matériau structurant pulvérulent à des emplacements correspondant à la section de l'objet, avec
une plate-forme de construction (31) destinée à supporter l'objet à former,
un dispositif de solidification (38, 39, 40),
un dispositif d'application de poudre prévu pour appliquer la poudre sur la plate-forme de construction ou la surface d'une couche déjà solidifiée,
ledit dispositif d'application de poudre comportant
un réservoir de poudre (35) avec de la poudre destinée à la construction de l'objet, en tant que matériau de construction,
**caractérisé en ce que** le dispositif d'application de poudre comporte une source de tension (32) pour l'application d'une tension entre le réservoir de poudre (35) en tant que première électrode et la plate-forme de construction (31) en tant qu'autre électrode,
la distance entre le réservoir de poudre (35) et la plate-forme de construction (31) étant réglable ainsi que la tension, de manière à générer un champ électrique entre le réservoir de poudre et la plate-forme de construction, apte à générer un déplacement contre la force de gravité du matériau pulvérulent hors du réservoir de poudre vers la plate-forme de construction, et
le réservoir de poudre (35) étant réalisé de manière à être composé au moins partiellement d'un matériau conducteur et à présenter une ouverture ou à être complètement ouvert sur son côté opposé à la surface d'application lorsque la tension est appliquée.

2. Appareil selon la revendication 1, avec en outre un dispositif de positionnement (37) pour le réglage de la distance entre le réservoir de poudre (35) et la plate-forme de construction (31).

3. Appareil selon la revendication 1 ou la revendication 2, dans lequel l'intensité de champ réglable est supérieure à 1000 V/m.

4. Appareil selon l'une des revendications 1 à 3, avec un dispositif de positionnement (37) positionnant le réservoir de poudre (35) sous la plate-forme de construction (31) pour l'application de la poudre.

5. Appareil selon l'une des revendications 1 à 4, avec en outre un dispositif secoueur ou un dispositif à vibrations (43) prévu pour secouer le réservoir de poudre pendant l'application de poudre, ou un mécanisme agitateur prévu pour mélanger le contenu du réservoir de poudre.

6. Appareil selon l'une des revendications 1 à 5, qui comporte un dispositif de rotation (41) auquel la plate-forme de construction (31) est reliée par un isolant (33), ledit dispositif de rotation (41) permettant une rotation de la plate-forme de construction autour d'un axe horizontal (42) disposé au-dessus de la plate-forme de construction pendant l'application de poudre.

7. Appareil selon la revendication 6, dans lequel le dispositif de solidification (38, 39, 40) est disposé de telle manière que la plate-forme de construction doit être pivotée d'un angle de 180° de la position où l'application de poudre a lieu, vers la position où la solidification a lieu.

8. Appareil selon l'une des revendications 6 ou 7, dans lequel le dispositif de solidification est une source de rayonnement orientant un rayonnement électromagnétique vers la couche de poudre.

9. Appareil selon l'une des revendications 1 à 8, lequel comporte plus d'un réservoir de poudre (35).

10. Procédé de fabrication par couches d'un objet tridimensionnel, comprenant les étapes suivantes :
application d'une couche d'un matériau pulvérulent sur la surface d'application d'une plate-forme dé construction (31) ou d'une couche déjà solidifiée, et
solidification sélective de la couche appliquée à des emplacements correspondant à la section de l'objet, **caractérisé en ce que** la poudre est appliquée par génération d'un champ électrique entre un réservoir de poudre (35) et la plate-forme de construction (31),
un dispositif selon l'une des revendications 1 à 9 étant utilisé.

11. Procédé selon la revendication 10, dans lequel le réservoir de poudre (35) est soumis à un processus de vibrations ou de secouage, ou bien où la poudre du réservoir de poudre (35) est maintenue en mouvement au moyen d'un mécanisme agitateur pendant l'application de couche.

12. Procédé selon la revendication 10 ou la revendication 11, dans lequel le champ électrique est réglé par variation de la distance entre le réservoir de poudre (35) et la plate-forme de construction (31).

13. Procédé selon l'une des revendications 10 à 12, dans lequel l'objet est produit dans un évidement de la surface d'application ou dans une cavité d'un autre objet.

14. Procédé selon l'une des revendications 10 à 13, dans lequel différentes poudres de plusieurs réservoirs de poudre (35) différents, qui se distinguent par le matériau et/ou par la granulométrie moyenne, sont utilisées pour l'application de couche.

15. Procédé selon la revendication 14, dans lequel plusieurs réservoirs de poudre (35) différents sont utilisés pour l'application d'une couche.
